# EUROPEAN PATENT SPECIFICATION

(11) **EP 3 964 942 B1**
(45) Date of publication and mention of the grant of the patent: **11.03.2026**
(21) Application number: 20194580.5
(22) Date of filing: 04.09.2020
(51) Int. Cl.: G06F 3/12

(54) **APPARATUS AND METHOD FOR BATCHING PRINT JOBS**
VORRICHTUNG UND VERFAHREN ZUR SCHUBWEISEN VERARBEITUNG VON DRUCKAUFTRÄGEN
APPAREIL ET PROCÉDÉ DE TRAVAUX D'IMPRESSION PAR LOTS

(43) Date of publication of application: 09.03.2022
(73) Proprietor: CANON KABUSHIKI KAISHA, OHTA-KU Tokyo 146-8501 (JP)
(72) Inventor: VONS, Johan G., Venlo (NL); DE JONG, Frederik, Venlo (NL); BANDEA, Vasile, Venlo (NL)
(74) Representative: Canon Production Printing IP Department

(56) References cited:
- WO-A1-2009/148519
- US-A1- 2009 033 978
- US-A1- 2019 391 775

## Description

### FIELD OF THE INVENTION

The present invention generally pertains to a method for batching the production of printed products that require more than one production step to be produced, the printed products comprising one or more components.

The present invention also pertains to a computer program product embodied on a non-transitory computer readable medium that, if executed on a processor, performs such a method.

The present invention further pertains to a printing system comprising at least one image forming device and at least one post-processing device, further comprising a print server configured to run such a method.

### BACKGROUND ART

It is known to batch print jobs that share similar print settings, or required resources. This reduces time necessary for setting up the equipment by necessitating set up time to a single instance or at least reducing interjob set up times to fewer or simpler set up actions reducing the total time spent on setting up the equipment therewith increasing the productivity of the print environment.

A known example is to batch simplex and duplex jobs as having a (cut sheet) printer switch between simplex and duplex jobs requires the printer to empty its paper path leading to an unproductive switching moment. Therefore, it is more productive to reduce the number of plexity switches by batching simplex jobs and batching duplex jobs together as much as possible.

It is noted that the word 'job' herein refers to jobs or print jobs as widely known in the printing industry. A job typically refers to printing operations, but is also used to refer to post-processing operations performed in the printing industry such as trimming, cutting, binding, folding, laminating, etc. Even if the word 'job' is used in combination with the word 'print' as in 'print job' it is not limited to a job defining at least a printing operation. It may equally well refer to a post-processing operation or multiple operations.

A disadvantage of the known batching methods is that they rely on similarities between print jobs. However, more complex print jobs may seem similar, but introduce issues due to the complexities in the print jobs.

For example, printing of a book may comprise of the printing of the book contents (the book block), the book cover, and a dust cover. If print jobs for books are batched, this may actually be counter-productive. For example, the book block is typically printed duplex. However, the dust cover is printed simplex as there is no need for information being printed on the inside of the dust cover that is folded around the book cover. However, if a batch of books is printed on a single printer (in other words the book block, the dust cover, and (for the sake of argumentation) the book cover are all printed on the same printer, the printer would be printing the book block, dust cover, and book cover for a first book, then the book block, dust cover, and book cover for a second book, etc. This will result in the printer having to start printing duplex for the book block, then switch to simplex printing for the dust cover and the book cover, and then switch back to duplex printing to proceed with the next book. This would require two plexity switches per book and result in productivity loss.

In the prior art this is prevented by not batching the actual books, but batching similar components. US2019/391775 A1 and WO2009/148519 A1 disclose such an approach. For example, for the book blocks print jobs are created and these print jobs are combined into a book block batch. Similarly, for the book cover print jobs are created and these are combined into a book cover batch. Lastly, for the dust cover print jobs are created and these are combined into a dust cover batch. However, now the print jobs are more tightly connected through the batch they are part of than through the product they are part of. This may work fine if everything is executed as initially planned, but leads to complexities when something does not work out as planned. US2009/033978 A1 discloses batching of whole jobs and processing together the batched jobs.

It is an object of the present invention to provide for easier batching of the production of printed products, particularly in cases where such production involves more than one production step or more than one component to produce the printed product.

### SUMMARY OF THE INVENTION

In a first aspect of the present invention, a method is provided for batching the production of printed products that require more than one production step to be produced, the printed products comprising one or more components, the method comprising the steps of: creating a product level batch, specifying more than one product to be produced in the product level batch; determining a workflow specifying the production steps for producing the products in the product level batch; creating for a component of a product to be produced, and for a production step operating on the component as specified in the determined workflow, a subbatch for executing the production step on the component and associating the subbatch with the product level batch; and for subbatches created in the previous step, associating first and second subbatches wherein the first subbatch directly precedes the second subbatch in the determined workflow in that the output of the production step corresponding to the first subbatch serves as an input to the production step corresponding to the second subbatch as defined by the determined workflow.

The products batched are not necessarily identical copies, but may be different products that at least share some common properties that make batching them advantageous.

In contrast to the prior art batches are created on multiple levels, namely at least on a product level for managing the production of the products to be printed and on a level of components or productions steps. The (sub)batches on the level of the components relate to separate production steps. Because all subbatches on the component level are associated with the product level batch, not only the relation between the product level batch and the subbatches is tracked, but also the relation between the subbatches is known through the product level batch.

The workflow may be specified during the creation of the product level batch and the subbatches. However, the workflow may also be prespecified. For example different workflows may be defined upfront for the production of different products. When the production of products is being planned, a production planner selects products to be produced and corresponding workflows to specify how the products will be produced. Products may then be batched automatically in accordance with the selected workflow and product specifications. Alternatively, the products are batched manually by the production planner.

As will be shown later on, a subbatch is not limited to a single type of component. Some subbatches correspond to production steps that operate on more than one type of component. A binding operation may operate on a book block and a book cover. A trimming operation may operate on a stack of book covers.

Furthermore, subbatches may also produce multiple types of components that each are fed directly into different succeeding production steps (with each their own corresponding subbatches). For example, two different components may be printed together and be cut apart to be processed in different ways. More specifically, two colour inserts for a further black-and-white book block, one being equally sized to the book block and the other being a larger sized fold-out, are printed together on the same sheet or web (because the same media type is required), cut apart (resulting in two intermediate components) and wherein the fold-out is additionally folded after which both inserts are inserted at their corresponding positions in the stack that is to form the book block. The printing subbatch for the inserts produces two components, the normal insert and the fold-out. The latter is further processed in a folding subbatch.

It is explicitly noted here that the association between two subsequent subbatches may be stored in the individual subbatches (or even only one of the subbatches), but it may be equally well stored in the product level batch. Furthermore, this association may also be stored in the form of the workflow wherein the product level batch or the subbatches reference the workflow and the workflow defines the relation between the subbatches.

In a second aspect of the present invention, a method is provided further comprising the step of: ordering the components of a subbatch corresponding to a production step based on the order of the components of a subbatch corresponding to a directly preceding or a directly succeeding production step.

A production ordering is set for a single batch, either the product level batch or a particular subbatch. Based on the relation between the subbatches as determined by the workflow and the actual operation in the production step of the subbatch, the ordering of the associated (sub)batches is automatically determined.

In a further aspect of the invention a method is provided further comprising the step of: scheduling a subbatch to only start after: all directly preceding subbatches are scheduled to have been completed, all directly preceding subbatches have started too, or a moment that allows for the components, the production step corresponding to the subbatch is to operate upon, have been completely processed by the directly preceding steps.

The planning of subbatches may be done in a conservative way: a subbatch is not started before directly preceding subbatches (that provide the components that the subbatch being planned accepts as input) have completed (as a whole). In this particular case the subbatch being planned cannot-once started-run out of input due to the preceding subbatches not producing according to the schedule, as the subbatch will not start at all until the preceding subbatches have fully completed (all components in the subbatch have been operated upon). In order to use this scenario a production environment requires sufficient buffering space for the intermediate components as a subsequent subbatch corresponding to a subsequent production step will not be starting until the preceding subbatches have completed. While those directly preceding subbatches are being executed the components resulting from those subbatches are buffered. Only when those directly preceding subbatches are completely done, the subsequent production step is started taking its input from the buffered intermediate components.

In a quite aggressive case a subbatch being planned is started as soon as the preceding subbatches start. This scenario is more appropriate in a more-or-less "continuous" production scheme. The consequence of this approach is that a subbatch might have started but may be required to wait for new input if preceding subbatches cannot operate on their components quickly enough. This requires that the subsequent production step is either sufficiently fast to immediately operate upon the components resulting from the directly preceding production step and is allowed to wait for it, or that there is some buffering capacity between the production steps.

In a more involved approach the planning of a subbatch is done such that the subbatch is scheduled to not start earlier than the moment whereupon it is known that for each individual component in the subbatch the preceding production step has finished operating upon the input for the component before the subbatch will start operating on the actual component. This way there will always be input for the subbatch to proceed but it will not require as much buffering space as the first planning scenario.

In an exemplary binding the binding may operate on a book block and a cover. The binding batch performs sequential binding operations according to the batched products. Each binding operation takes a single book block and a single cover as input. The binding batch will start as soon as the planning shows that each binding operation will have a book block and cover readily available once that particular binding operation is supposed to take place. This means that the binding subbatch and the directly preceding subbatches may execute concurrently. So the first book blocks and covers may already be bound together while later book blocks and covers are still earlier in the workflow.

In another example a cutting subbatch may operate on stacks of individually produced (e.g. printed) sheets in a preceding subbatch. The cutting subbatch is not started until the schedule shows that each cutting operation can be executed without waiting for a stack to be ready. This might mean that the cutting does not start before all stacks except for one or only a few are waiting to be cut as cutting each stack typically takes considerably less time than forming the stack (or printing the stack).

In another aspect of the invention a method is provided, wherein the production steps in the workflow are defined by the individual production devices used to perform the steps.

For example, a printing device with an inline puncher will result in a single production step that combines the printing and punching operation in a single production step as from the abstraction level of the devices, unprinted (and unpunched) media goes in, and punched, printed sheets are produced as output. On the other hand, a printing device and a separate puncher are modelled as two separate production steps.

In another aspect of the present invention a method is provided, wherein a subbatch is sent for execution to an image forming device if the subbatch corresponds to a printing production step in the workflow, or to a post-processing device if the subbatch corresponds to a post-processing production step in the workflow.

According to an embodiment of the present invention a computer program product is provided that is embodied on a non-transitory computer readable medium that, if executed on a processor, performs the steps of any of the preceding aspects according to the invention.

According to another embodiment of the present invention a printing system is provided comprising at least one image forming device and at least one post-processing device, further comprising a print server configured to run the method according to any of the preceding aspects.

Further scope of applicability of the present invention will become apparent from the detailed description given hereinafter. However, it should be understood that the detailed description and specific examples, while indicating embodiments of the invention, are given by way of illustration only, since various changes and modifications within the scope of the invention will become apparent to those skilled in the art from this detailed description.

### BRIEF DESCRIPTION OF THE DRAWINGS

The present invention will become more fully understood from the detailed description given hereinbelow and the accompanying schematical drawings which are given by way of illustration only, and thus are not limitative of the present invention, and wherein:
- Fig. 1: shows an example of a printed product that may be produced according to the invention.
- Fig. 2: shows a first component to be produced for the printed product of Fig. 1.
- Fig. 3: shows a second component to be produced for the printed product of Fig. 1.
- Fig. 4: shows a third component to be produced for the printed product of Fig. 1.
- Fig. 5: shows a diagram for a workflow to produce the printed product of Fig. 1.
- Fig. 6: shows a diagram of a way of organising the batching according to a first aspect of the invention.
- Fig. 7: shows a diagram of an improved way of organising the batching according to a second aspect of the invention.
- Fig. 8: shows a diagram of a workflow to produce a second printed product according to the invention.
- Fig. 9: shows an example of a situation where the present invention improves over the prior art.
- Fig. 10: shows a diagram for organising the batching of the production of Fig. 8.
- Fig. 11: shows the example of Fig. 9 again, but now improved through the present invention.
- Fig. 12: shows a preferred embodiment for the present invention.
- Fig. 13: shows a flow chart of a method according to the present invention.
- Fig. 14: shows a flow chart of a further method according to the present invention.
- Fig. 15: shows a flow chart depicting a subprocess of the flow chart of Fig. 14.
- Fig. 16: shows a flow chart of a further method according to the present invention.

### DETAILED DESCRIPTION OF THE DRAWINGS

The present invention will now be described with reference to the accompanying drawings, wherein the same reference numerals have been used to identify the same or similar elements throughout the several views.

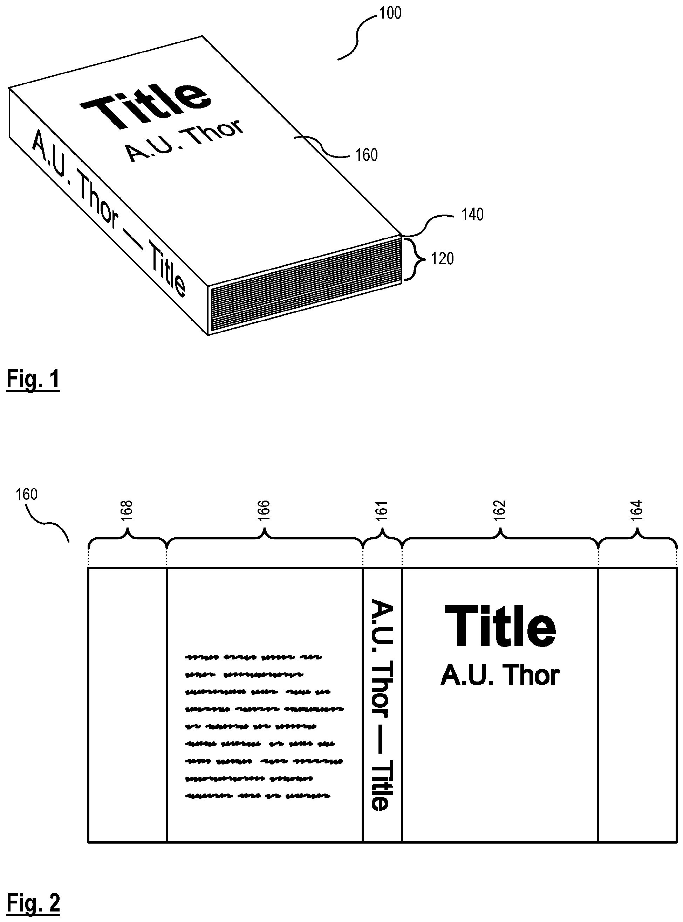

The invention will further be described taking the printing of a book 100 as an example. A book 100 (Figure 1) is typically produced by printing the inner works of the book (the book block 120), and binding the book block 120 into a book cover 140. Afterwards, a dust cover 160 may optionally be wrapped around the book cover 140. Wrapping typically happens with hardcover books allowing for a relatively simple way to produce a full colour, full bleed outer appearance.

The dust cover 160 (Figure 2) is wrapped around the book cover 140 and consists of a front section 162, typically being printed with the title and the name of the author and some graphics and text to entice customers into buying the book. Furthermore, there is a back section 166 typically providing a synopsis of the book 100 and positive critiques received by the book 100. The front section 162 and back section 166 are connected through a spine section 161 typically provided with the book title and the author name. Lastly, the front section 162 and the back section 166 are provided with a front fold section 164 and a back fold section 168 respectively that are folded around respectively the front and back of the book cover 140 to keep the dust cover 160 in place.

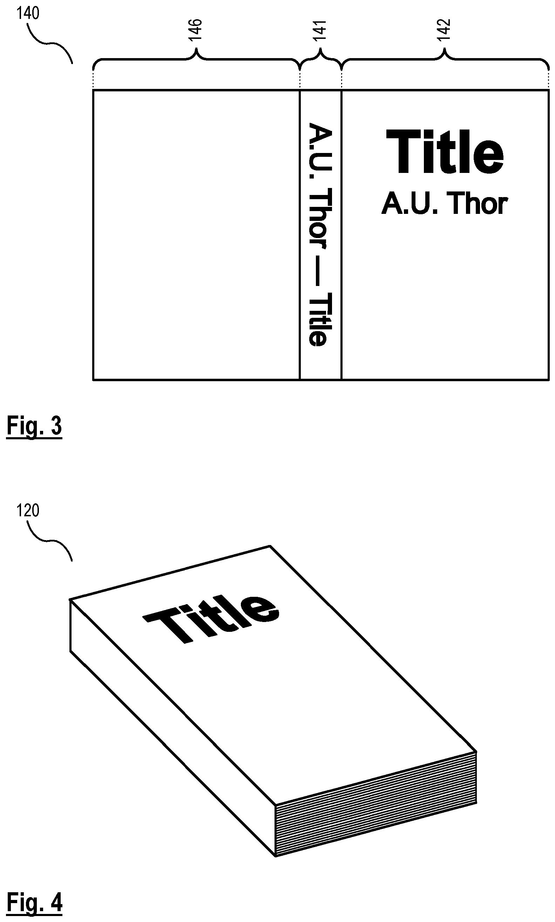

The book cover 140 (Figure 3) comprises a front cover 142, a back cover 146, and a spine 141. Similar to the dust cover 160, the front section 142 is typically provided with the book title and the author name and the spine 141 too. In case the book 100 is provided with a dust cover 160, the book cover 140 typically has a much simpler design. If a book 100 is not provided the book cover 140 may have a more appealing design similar to a dust cover 160.

The book block 120 (Figure 4) comprises the sheets making up the inside of the book 100. The book block 120 may be a stack of sheets bound together by a binding operation, or alternatively the binding of the stack of sheets into a book block 120 happens during the same binding operation where the book cover 140 is attached to the book block 120.

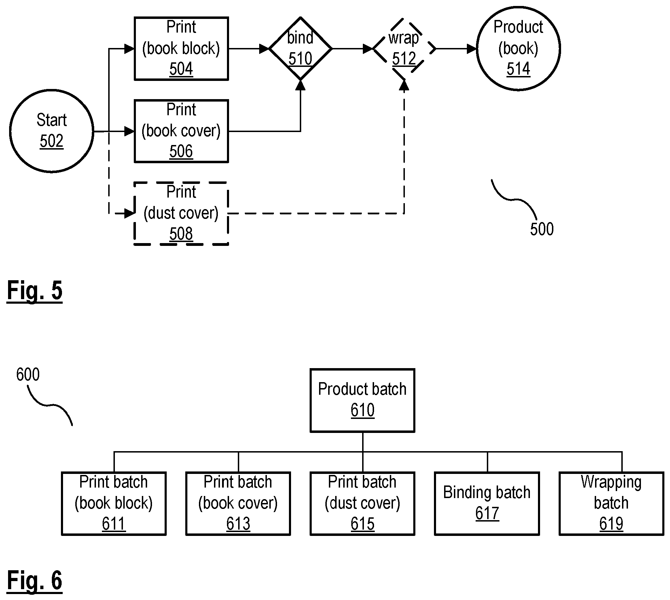

The book 100 is formed by applying a number of production steps. An example workflow for producing a book 100 is shown in simplified form in Figure 5. The workflow starts 502 for example by gathering and preparing the required resources. The book 100 comprises multiple components: the book block 120, the book cover 140, and the dust cover 160. The dust cover 160 may be an optional component, in other words, some of the books to be produced according to the workflow do have a dust cover 160, while others don't. This is indicated by the dashed lines. The book block 120, the book cover 140, and the dust cover 160 are each printed 504, 506, 508. The three printing actions 504, 506, and 508 are shown as parallel branches. This means that they may be executed in parallel, although this is not necessary. It simply means that the start time and the end time of these three operations do not have strict dependencies with regard to one another; they may each be executed in any order or completely or partly in parallel. The next action is binding 510 the book cover 140 and the book block 120 together. This binding action 510 requires the book block 120 to be printed 504 as well as the book cover 140 to be printed 506 before it can start. After the binding step 510 follows the optional wrapping step 512 wherein the bound book resulting from the binding step 510 is wrapped into the dust cover 160. If there is no dust cover 160 for a particular book, the bound book resulting from the binding step 510 will simply proceed through this step without any wrapping taking place. After the wrapping step 512, the final product 514, book 100, results.

According to the invention, products to be produced according to a workflow, for example such as shown in Figure 5, will be produced in batches. The production of the final products is ordered in a product batch 610 (Figure 6). What products are combined in a single product batch 610 may depend on several things. The most important thing is that batching is done to reduce set up times and to reduce the number of operation to be executed. For example, each dust cover 160 may be trimmed to the correct size individually, but it is more efficient, to trim stacks of dust covers 160 in a single operation. Therefore, products may be combined into a single product batch 610 based on the need for specific operations (for example trimming), and the settings for the operations (for example trim size). Other examples are batching products based on the media type to print on in order to prevent having to switch media during production. In continuous feed printing, changing media type is productivity-wise quite expensive. In cut sheet printing, this is also the case, but to a lesser degree. For example, if all products in a single product batch 610 require either one of two media types of similar media weight (thickness), and the printer is provided with at least two high-volume media input modules, there may be no or a low (due to print gap switches in inkjet printers) productivity penalty.

It should be noted that the batching happens with regard to different products, albeit some of the batched products may be identical products, for example, because multiple customers ordered the same product.

According to the present invention, in addition to the product batch 610, subbatches 611-619 are created in accordance with the applicable workflow 500 for producing the products. Workflow 500 shows (Figure 5) three printing operations 504, 506, 508, for respectively the book block 120, the book cover 140, and the dust cover 160. So three subbatches 611, 613, 615 are created for printing respectively the book block 120, the book cover 140, and the dust cover 160. Furthermore, workflow 500 comprises a binding operation 510 for binding the book block 120 and the book cover 140 as well as a wrapping operation 512 for wrapping the dust cover 160 around the bound book. Subbatches 617, 619 are created in accordance with the invention for respectively the binding operation 510 and the wrapping operation 512.

Due to the organisation of product batch 610 and the subbatches 611-619, the invention allows to track and manage production on the higher product level through the product batch 610 as well as on the lower level of individual production operations through the subbatches 611-619. For example, the print subbatches 611, 613, 615 may provide similar functionality as prior art print batches, while at the same time benefiting from allowing a printing system to easily associate a particular book block print batch 611 with a binding batch 617 that is "consuming" the book blocks 120 produced in the print batch 611.

The batch relations overview 600 of Figure 6 shows a parent-child relationship between the product batch 610 (the parent) and all the subbatches 611-619 (the children).

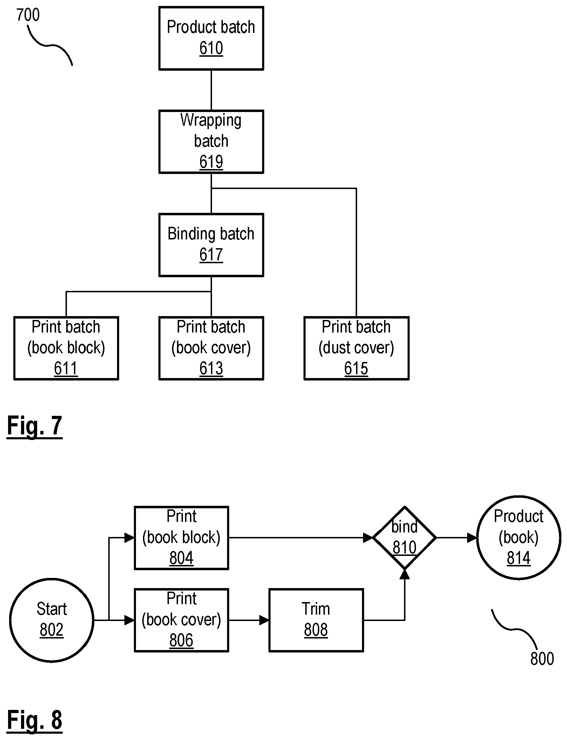

This hierarchical representation between the product batch 610 and the subbatches 611-619 may even be taken a step further as shown in an improved representation (Figure 7). In this modified hierarchical representation 700, the interdependence of the subbatches 611-619 is also reflected as determined by the workflow 500. The book block print subbatch 611 and the book cover print subbatch 613 both produce the input for the binding subbatch 617 and therefore, both of them are a child of the binding subbatch 617. Furthermore, the binding subbatch 617 and the dust cover print subbatch 615 produce the input for the wrapping subbatch 619. Therefore, these two subbatches 615, 617 are a child of the wrapping subbatch 619. Lastly, the wrapping subbatch 619 produces the final product 100, so the wrapping subbatch 619 is a child of the product batch 610. This representation makes it immediately clear what subbatches 611-619 depend on what other subbatches.

Figure 8 show a workflow 800, that is a variation on the workflow 500 of Figure 5. The workflow 800 starts 802 and prints 804 a book block 120. It also prints 806 a book cover 140. The book covers 140 are trimmed 808 and subsequently each bound in a binding step 810 together with the book block 120 resulting from the book block print operation 804. After binding 810, the final product (a bound book) results 814.

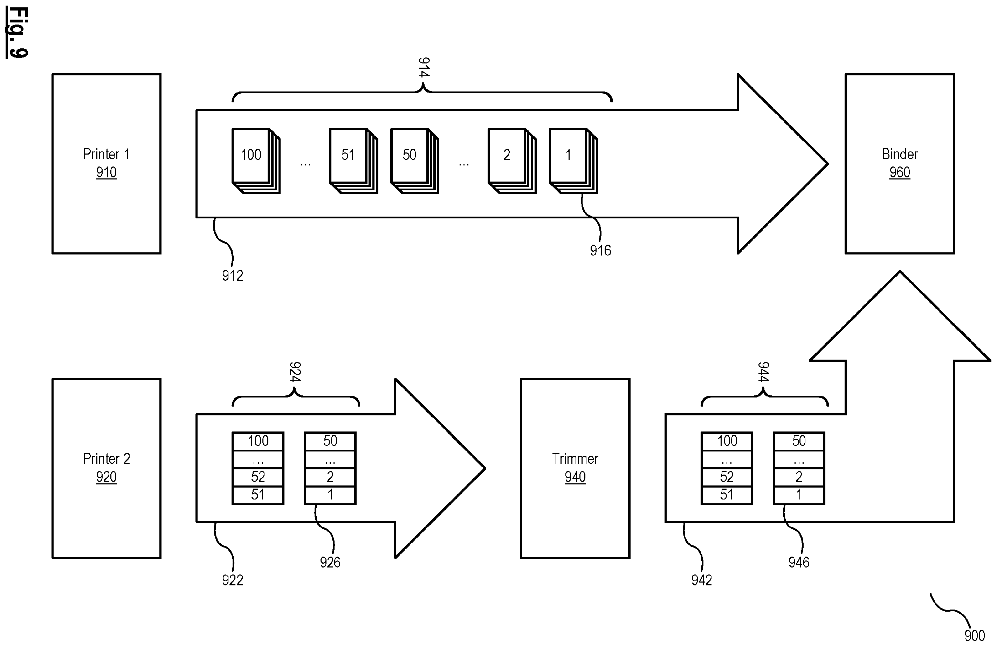

In this particular example, the trimmer may trim a stack up to 50 sheets. So it is more efficient to trim the book covers in stacks of 50 sheets. A first printer 910 (Figure 9) prints the actual book blocks 120. The book blocks 120 are produced as a sequence 914 of stacks 916 of sheets. The book blocks 120 are provided 912 to the binder 960. Whether the book blocks 120 are already glued into a single book block 120 when being fed to the binder 960 or are fed to the binder as stacks 916 of (not glued yet) sheets is irrelevant for the present discussion (but it is typically specified in the workflow in accordance with the invention).

A second printer 920 prints the book covers 140. The book covers 140 are stacked by the printer 920. Because the workflow 800 specifies a trim operation 808 after the printing 806 of the book cover 140, and during scheduling of the product batch 610, a trimmer 940 is assigned to the trim subbatch, it is known from the stored or specified device properties that the trimmer 940 has a maximum stack height that can trim not more than 50 sheets of the media type the book cover 140 is being printed upon. Therefore, the subbatch for the book cover print operation 806 is configured to output printed book covers 140 on stacks with a maximum of 50 sheets. The second printer 920 therefore produces a sequence 924 of stacks 926 of sheets with each a maximum of 50 sheets. This sequence 924 of stacks 926 of sheets is provided 922 to the trimmer 940. The trimmer 940 trims a full stack of 50 sheets in a single operation and produces a sequence 944 of trimmed stacks 946 of book covers 140 that are provided to the binder 960.

However, because printing a number of sheets to a stack will result in the first sheet being printed to end up on the bottom of the stack, at the binder 960 there will be a problem without further precautions. The book blocks 916 arrive in the original order (1, 2, ..., 50, 51, ..., 100, ...) at the binder 960. However, when the book covers 140 are printed in the same order, they arrive in stacks 946 and the first book block 916 will be bound to the top book cover 140 from the first stack 946. However, due to the stacking of 50 book covers, the top most book cover 140 in the first stack 946 is the 50th book cover 140. Similarly, the second book block 140 will be bound to the 49th book cover until the 50th book block 120 is bound to the first book cover 140. At the second stack 946 the same problem occurs with the 51st book block 120 being bound to the 100th book cover 140.

Therefore, according to the invention, the ordering within a subbatch 611-619 is deduced from not only the ordering in the product batch 610, but also from the relationship between the subbatches in correspondence with the workflow 800. For the particular example of the workflow 800 as depicted in Figure 8, this works as follows.

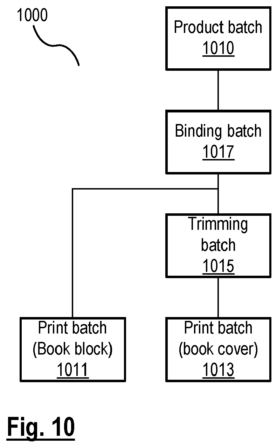

Subbatches are defined according to a hierarchical layout 1000 similar to Figure 7, but adopted for workflow 800 (see Figure 10). A product batch 1010 forms the root of the hierarchical tree and represents the whole production batch for producing the products in a batch. These products result from the last step from the workflow 800, the binding step 810. This is represented by the binding subbatch 1017. The binding subbatch 1017 requires as input the results from the print subbatch 1011 for the book blocks 120 (corresponding to the print step 804 for printing the book blocks 120) and the trimming subbatch 1015 for the book covers (corresponding to the trimming step 808 for the book covers 140). Finally, the trimming subbatch 1015 requires as input the results from the print subbatch 1013 (corresponding to the print step 806 for the book covers).

A target ordering is determined for a first batch, either the product batch 1010, or one of the subbatches 1011-1017. For example, the ordering on the level of the product batch 1010 is set to produce the books 1-100 in their numerical order (namely, 1, 2, 3, ..., 99, and lastly 100). Based on either the workflow 800 or the hierarchical layout of the product batch 1010 and subbatches 1011-1017, it can be seen that the product batch 1010 directly depends on binding subbatch 1017, so to obtain the determined numerical ordering for the product batch 1010, the binding subbatch 1017 needs to produce the products in numerical ordering. As the binding subbatch 1017 produces its output according to the same ordering as its input, the print subbatch 1011 and the trimming subbatch 1015 both need to provide their results in numerical ordering. This means in turn that print subbatch 1011 for the book blocks 120 needs to print the book blocks 120 also in numerical order. The trimming subbatch 1015 however, will operate on stacks. Therefore, book covers 140 need to be produced in stacks with the first book cover 140 on the top of the first stack, the second directly underneath the first book cover 140, etc. up to the 50th book cover on the bottom of the first stack (in case a stack height of 50 is taken). Next, the 51th book cover 140 needs to end up at the top of the second stack and the 100th book cover 140 at the bottom of the second stack. The trimming step 808 will itself not change the ordering within a stack, nor the ordering of the stacks in the sequence of stacks. Therefore, the trimming subbatch 1015 will propagate the ordering it received from the binding subbatch 1017 to the print subbatch 1013 for printing the book covers 140. So finally, the ordering of the print batch 1013 is set to print the book covers 140 in the order (50, 49, ..., 2, 1, 100, 99, ..., 52, 51) and output in stacks of 50 sheets.

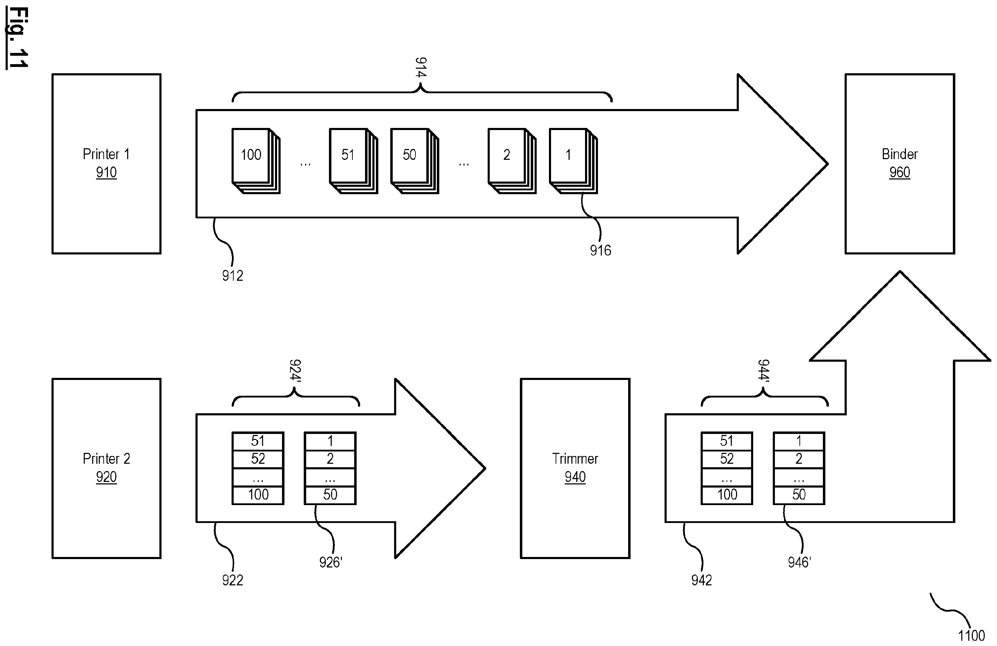

Therefore, the ordering of the book covers 140 from Figure 9 is changed as shown in Figure 11. The ordering of the sequence 914 of book blocks 916 is not changed. The first printer 910 prints the book blocks 916 in numerical order and the book blocks 916 are received in this order at the binder 960. However, the book covers 140 are printed in the order 50, 49, ..., 2, 1, 100, 99, ..., 52, 51. Furthermore, the second printer 920 ejects the book covers 140 in stacks 926' of 50 sheets so that the first stack 926' comprises from top to bottom, the 1st, 2nd, ..., to 50th book cover 140 and the second stack 926' will comprise from top to bottom the 51st, 52nd, ..., to 100th book cover 140.

These stacks 926' are provided 922 to the trimmer 940 and trimmed. As the trimmer 940 does not alter the ordering within a stack 926' nor the order of the stacks 926' themselves in the sequence 924 of stacks 926', the sequence 944 of stacks 946' coming from the trimmer 940 and being provided 942 to the binder 960 will be identical to the sequence 924 of stacks 926' going into the trimmer 940.

Now the binder 960 can separate the book covers 140 from the stacks 946' in an order corresponding to the order wherein the book blocks 916 are being provided 912 to the binder, and the bound books produced will be in the requested numerical order (1, 2, ..., 50, 51, ..., 100).

Another advantage of the present invention is that in the case of issues during production, they can be more easily resolved. For example, in the case that something goes wrong during printing of one component, for example a book cover 140, due to the known relation between the subbatches and their ordering it is also known which of the book blocks 120 corresponds to the book cover 140 at issue and corrective actions can automatically be taken. In this sense the present invention allows for tracking individual components of the products to be printed and the relation between the components.

For example, instead of having to stop production to have the corresponding book block 120 removed from production before it hits the binder and is bound to the wrong book cover 140 or a misprinted book cover 140 (depending on whether the printer printing the book cover 140 is able to automatically remove the misprinted book cover 140), the binder can be automatically instructed to pass on the book block 120 without binding it to a cover so that it can be bound afterwards to a (automatically) reprinted book cover 140. If the misprinted book cover 140 was removed by the printer, the corresponding book block 120 may be passed on by the binder 960 without binding, but also without taking a book cover 140 from the stack 946'. If the misprinted book cover 140 cannot be automatically removed, it will be present in the stack 946', but now the binder 960 is commanded to take the corresponding book block 120 and the misprinted book cover 140, but pass them on together without performing the actual binding operation, preventing wasting the book block 120 by binding it to the misprinted book cover 140 and allowing it to be bound to the reprinted book cover 140 later.

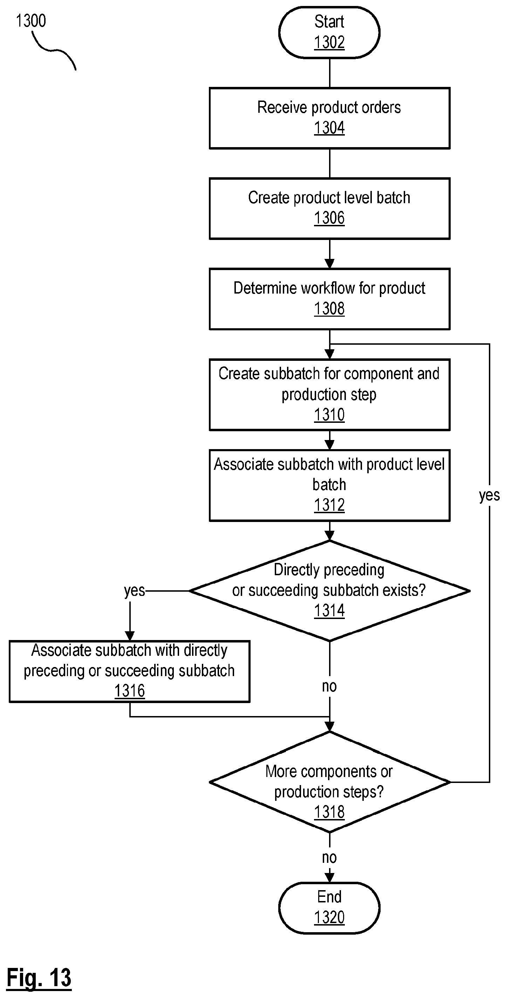

An approach to allow the present invention to track the relation between the product level batch 610 on the one hand and the subbatches 611-619 on the other hand, but also between the subbatches 611-619 mutually, is depicted in flow chart 1300 (Figure 13). The process starts 1302 and receives product orders. The product orders may be manually entered into a system according to the present invention, or may be received 1304 from an external system such as a print Management Information System (MIS). Based on the received product orders and common properties of the ordered products or common properties of the production steps required to produce the ordered products, multiple ordered products are grouped together 1306 into a product level batch 610. For the product level batch 610, the workflow 500 is determined.

The workflow 500 may already be available from the product order, for example because orderable products in the system already each have a workflow 500 preassigned to them, or because a workflow 500 is assigned to a production order after the order has been received 1304 or created. Note that the determination what products to group together into a single product level batch 610, may use as selection criteria information on the assigned workflow 500 for each ordered product.

Based on the workflow 500 a subbatch is created 1310 for a component in the workflow 500 and a production step 502-512 in the workflow. Components are the inputs and outputs of the production steps 502-512 in the workflow. Components may be physical components such as final products, for example a book 100, intermediate products, for example book block 120, but also intangible components such as print files to be printed, for example a Portable Document Format (PDF) file defining the contents of the book block 120. Furthermore, the production steps 502-512 may be physical actions such as printing, binding, punching, but may also be digital actions such as image enhancement processing, format conversion, etc.

After a subbatch has been created, defining what action (production step 502-512) to perform on what component, the subbatch is associated 1312 with the product level batch 610. This association makes it easy to relate information regarding individual production steps 611-619 to the actual product level batch 610 and consequently the product orders and vice versa. For example, consequences of issues are more easily derived such as what product orders are affected (delayed) once a printer is forcedly stopped for some longer time, or what final products 100 have been affected if it is determined that a printing subbatch was run without calibrating the printer 910.

Next, it is determined 1314 whether preceding or succeeding subbatches 611-619 have already been created. If so (yes-branch), the currently created subbatch 611-619 is associated 1316 with its preceding and succeeding subbatches 611-619. If the associations have been created, or (no-branch) if there are no preceding or succeeding subbatches (yet), it is determined 1318 whether there are more components or production steps 502-512 to create subbatches for. If so (yes-branch), the execution flow jumps back to the step of creating 1310 a subbatch for the further component or production step 611-619 and the next step for associating this subbatch 611-619 are executed. If there are no more components or production steps 502-512 in the workflow 500 (no-branch from step 1318), the procedure ends 1320.

Note that associating subbatches 611-619 may be implemented as unidirectional links, but preferably as bidirectional links. The advantage of bidirectional links is that there is no performance penalty when traversing the thus created graph of batches in either direction. For example, determining a production ordering may be done starting from any batch (product level batch 610, or any subbatch 611-619) regardless whether this is a subbatch 611-615 corresponding to a production step 504-508 at the start of a workflow 500 and the ordering of (directly and indirectly) succeeding subbatches 617, 619 are derived from there, or the other way around.

Furthermore, the associations may be stored in the actual subbatches themselves, but not necessarily. For example, the associations may also be jointly stored in the production level batch 610 or by way of a reference to the workflow 500.

Note that the workflow 1300 shows that associations between batches 610-619 are created as soon as a subbatch 611-619 is created. It should be clear to the skilled person though that it is equally possible to first create all batches 610-619 and only afterwards create all the associations.

As already illustrated with regard to Figures 9 and 11, the present invention may be advantageously applied to determine a productive production order. Figure 13 depicts a flow chart 1400 for determining the ordering. The procedure starts 1402 and a subbatch 611-619 (or the actual product level batch 610) is selected 1404 for ordering. Next, an ordering is determined 1406 for the selected batch 610-619. This ordering may be any suitable ordering. For example, the ordering may be set on a product level batch 610 based on an agreed deadline for delivery of the ordered products in the product batch 610 (earlier expiring deadlines will appear earlier in the ordering). Alternatively, a determined ordering may be set on one of the subbatches 611-615 corresponding to a production step 504-508 that accepts its input from an external source and the ordering is determined by the order wherein the input will be received from the external source.

Note that how ordering is defined is purely a matter of definition: the order may be an input order, a processing order, or an output order. Note also that an input order and an output order of a single production step 504-512 are not necessarily identical, but that they are strictly related by processing step performed in the subbatch and can be mapped from one to the other. For example, a processing step taking sheets from a stack, processing the sheet and outputting the sheet on an output stack will effectively reverse the order of the sheets in a stack.

Note further, that the ordering may comprise a hierarchy: as noted in the previous paragraph with regard to stacks and as shown in the examples of Figures 9 and 11, any form of grouping of components results in an extra level in the hierarchy: sheets have an ordering in stacks and stacks may be processed in a stack order. A stack may at some point be packaged by wrapping or tying and multiple wrapped stacks may themselves be stacked and put in a box. Therefore, there is a ordering for each level of grouping: sheets in a stack, wrapped stacks in box, and the boxes themselves.

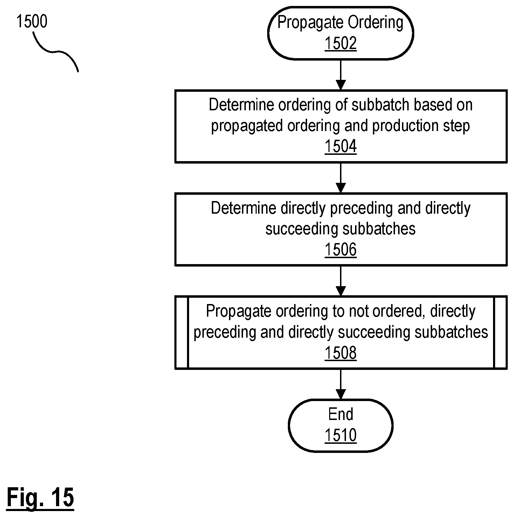

After determining 1406 the ordering, the thus determined ordering is propagated to all the other batches 610-619 by first determining 1408 the directly preceding and directly succeeding subbatches of the selected batch 610-619 and subsequently propagating 1410 the determined ordering to each directly preceding and each directly succeeding subbatch 611-619 of the selected batch 610-619. This propagation step 1410 is further detailed in flow chart 1500 (Figure 15). After the ordering has been propagated to all directly preceding and directly succeeding subbatches 611-619, the procedure ends 1412.

Flow chart 1500 (Figure 15) shows how an ordering is propagated for a single (preceding or succeeding) subbatch. It is therefore executed multiple times (provided there are at least multiple preceding and succeeding subbatches 611-619), namely for each directly preceding and each directly succeeding subbatch (target subbatches) of a subbatch for which the ordering has already been determined (source subbatch). The ordering of the target batch is determined 1504 based on the ordering of the source subbatch and the production step 504-512 taking place between the ordering of the source subbatch and the target subbatch.

Taking the example of the book production of Figure 11 and using the output ordering as example, the binding subbatch 1017 may have an output ordering equal to the numerical order of the resulting books 100. As the binding operation does not change the order with regard to the book blocks, the output ordering of the book block print subbatch 1011, the output ordering of the binding subbatch 1017 propagates unmodified to the book block print subbatch 1011. However, the book covers 140 are received in stacks and therefore, the output ordering for the trimming batch 1015 is set to have the first book cover 140 at the top of the first stack 946' with the numbers of the book covers increasing to the bottom of the stack and continuing at the top of the next stack 946' and, again, increasing to the bottom of the stack 946'.

After the ordering of a batch 610-619 has been determined 1504, the directly preceding and directly succeeding batches 610-619 of the target batch are determined 1506 to further propagate the ordering to other batches. Therefore, in step 1508 the propagation procedure 1500 is recursively called again for all the directly preceding and directly succeeding batches 610-619 in so far they have not been ordered already.

After the ordering has been determined and further propagated to further batches 610-619, the propagation for the present (target) batch 610-619 is done and the propagation procedure for the present batch ends 1510.

Note that the product level batch 610 is a higher level batch compared to the subbatches 611-619. However, from an ordering perspective, it is not different from the subbatches 611-619 and can be handled identical. In that sense, its output ordering is identical to the output ordering of the last production step 512 in the workflow 500 and thus identical to the ordering of the corresponding "last" subbatch 619.

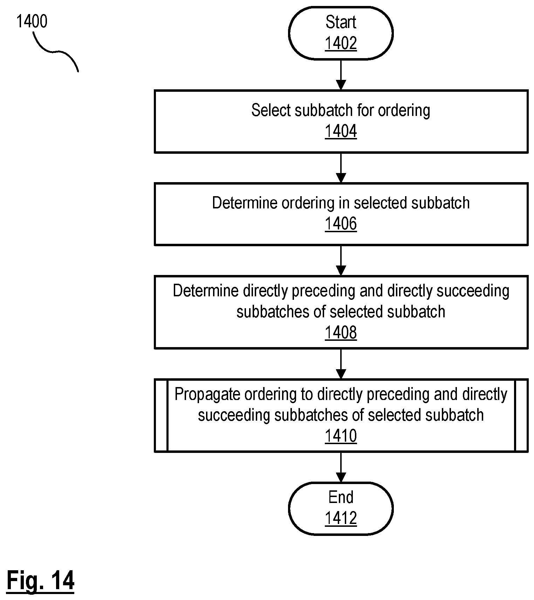

The ordering procedure 1400 as discussed in relation to Figures 14 and 15 may be executed after all the batches 610-619 have been created. However, alternatively the ordering procedure 1400 is integrated into procedure 1300 of Figure 13 and determining the ordering of the batches 610-619 happens at the same time as the creation and association of the batches 610-619 happens.

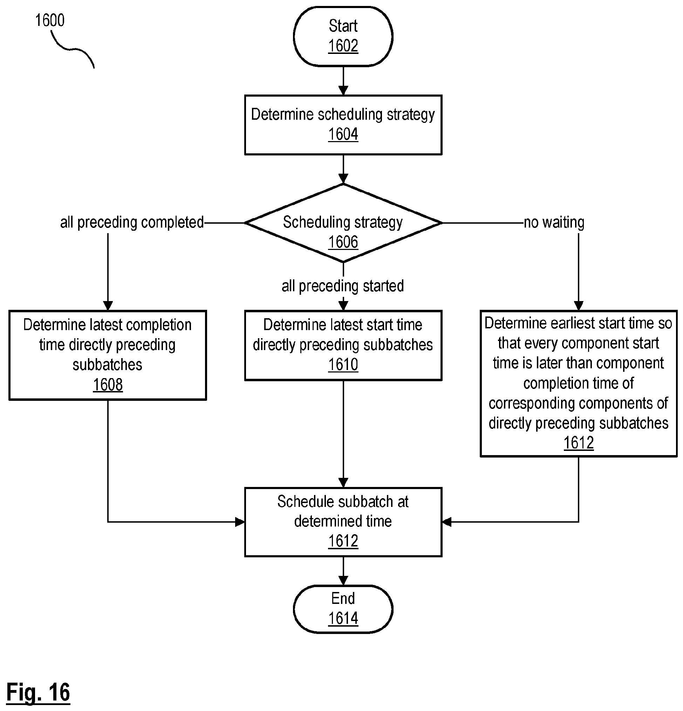

Once an ordering is known, the production steps may be scheduled in time (Figure 16). Based on how much time each individual production step 502-512 takes for each component it is possible to schedule all production steps 502-512. The scheduling procedure 1600 starts 1602 and determines 1604 a scheduling strategy.

Some examples of scheduling strategies are:

### • "preceding all completed"

**In** this strategy, a subbatch is not scheduled to start before all directly preceding subbatches are scheduled to have been completed.

As the preceding subbatches have completed before a subbatch is started, this scheduling strategy requires the components resulting from the preceding subbatches to be buffered. Note that such buffering may be as simple as a single stack in an output tray as long as the components resulting from the preceding subbatch fit on a single stack. In such cases there is still buffering although no "additional" buffering equipment of reserved buffering space may be required.

### • "preceding all started"

**In** this strategy, a subbatch is not scheduled to start before all directly preceding subbatches have started too.

As long as the processing step for the subbatch consumes components faster than the processing step of the preceding step produces the components, there is no need for buffering. As an alternative to buffering, the processing step of the preceding subbatch may be put on hold if the processing step of the present subbatch is not ready yet for accepting a next component. This strategy has the advantage compared to the previous one that the present subbatch and the preceding subbatch partly run concurrent resulting in a shorter production time.

### • "no waiting"

**In** this strategy, a subbatch is not scheduled to start before a moment that allows for the components, the production step corresponding to the subbatch is to operate upon, have been completely processed by the directly preceding steps. **In** this strategy, a subbatch is scheduled to start such that as soon as the processing step is ready to process a component in the subbatch, the component is available to be processed. In other words, the processing step of the preceding subbatch is (preferably just) done with the component. This results in an optimisation that prevents the present subbatch from being put on hold to wait for further components resulting from the preceding subbatch. At the same time the present subbatch is started as early as possible to reduce intermediate buffering between the preceding subbatch and the present subbatch or alternatively reduce the change of having to put the processing step of the preceding subbatch on hold.

Note that the scheduling strategy may be an overall strategy, but may also vary per production step 502-512. This scheduling strategy is determined by preference, but may be constrained by the production process. For example and as already discussed earlier, in the absence of buffering between two production steps 502-512 there is no possibility to first process all components in the first production step and only after all components have been processed, process all components in the second production step.

After the scheduling strategy has been determined 1604, the procedure selects 1606 the appropriate branch ("all preceding completed", "all preceding started", "no waiting"). In the case the "all preceding completed" strategy was selected, the latest scheduled completion time of the directly preceding subbatches is determined 1608 and the scheduled start time of the present subbatch is determined 1612 to be this latest scheduled completion time. Alternatively, if the "all preceding started" strategy was selected, the latest scheduled start time of all the directly preceding subbatches is determined 1610, or more precisely the latest scheduled completion time of the very first component of the preceding subbatch. The scheduled start time of the present subbatch is determined 1612 to be this latest scheduled "start time".

Furthermore, if the "no waiting" strategy was selected the earliest scheduled start time for the subbatch is determined 1612 that will result in the components simultaneously needed for performing a processing step of the subbatch being available at the moment the processing step is to be performed. As an example: the binding subbatch 1017 (Figure 10) will always have a book block 120 ready and a book cover 140 ready when it wants to perform a binding operation. This way the time the binder 900 is waiting is minimised. At the same time, the earliest moment that this condition can be satisfied for all book blocks 120 and book covers 140 is chosen so that minimal buffering is required between the binding step 810 and the preceding steps 804 and 808.

After the subbatch has been scheduled, the procedure ends 1614.

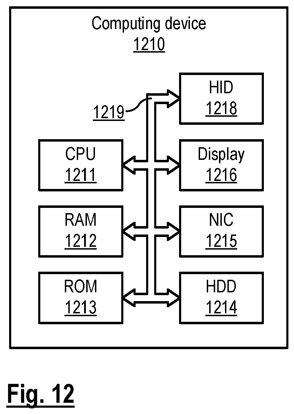

A typical implementation for the invention is in the form of computer program running on a general computing device 1210 (Figure 12) comprising a Central Processing Unit (CPU) 1211 for processing instructions that are loaded into a volatile memory such as a Random Access Memory (RAM) 1212. The instructions may be loaded from a nonvolatile memory such as a Read-Only Memory (ROM) 1213 or a Hard Disk Drive (HDD) 1214. Alternatively, the computer program may be loaded from a remote storage over a computer network or generically a communications network by means of a Network Interface Card (NIC) 1215. The computing device 1210 is operated through a Human Interface Device (HID) 1218. The operator may get feedback from the computing device 1210 through a display 1216. Furthermore, the computing device 1210 may also be operated through a remote device connected to the computing device 1210 over a communications networks connected to the NIC 1215. In order to be able to run the computer program implementing the invention, the computing device 1210 stores an Operating System (OS) on its HDD 1214 or in its ROM 1213, the OS being loaded upon the computing device 1210 booting.

The computing device 1210 may be a print server controlling the printers 910, 920, and (directly or indirectly) the post-processing devices such as trimmers 940, binders 960, wrappers, cutters, etc. In another embodiment the computing device 1210 is a print production server or print Management Information System (MIS).

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. In particular, features presented and described in separate dependent claims may be applied in combination and any advantageous combination of such claims is herewith disclosed.

Further, the terms and phrases used herein are not intended to be limiting; but rather, to provide an understandable description of the invention. The terms "a" or "an", as used herein, are defined as one or more than one. The term plurality, as used herein, is defined as two or more than two. The term another, as used herein, is defined as at least a second or more. The terms including and/or as used herein, are defined as comprising (i.e., open language). The term coupled, as used herein, is defined as connected, although not necessarily directly.

The invention being thus described, it will be obvious that the same may be varied in many ways within the scope of the invention, which is defined by the following claims.

## Claims

1. Method of batching the production of printed products that require more than one production step to be produced, the printed products comprising one or more components, the method comprising the steps of:
- creating a product level batch, specifying more than one product to be produced in the product level batch;
- determining a workflow specifying the production steps for producing the products in the product level batch;
- creating for a component of a product to be produced, and for a production step operating on the component as specified in the determined workflow, a subbatch for executing the production step on the component and associating the subbatch with the product level batch; and
- for subbatches created in the previous step, associating first and second subbatches wherein the first subbatch directly precedes the second subbatch in the determined workflow in that the output of the production step corresponding to the first subbatch serves as an input to the production step corresponding to the second subbatch as defined by the determined workflow.

2. The method according to claim 1, further comprising the step of:
- ordering the component of a subbatch corresponding to a production step based on the order of the component of a subbatch corresponding to a directly preceding or a directly succeeding production step.

3. The method according to claim 1 or 2, further comprising the step of:
- scheduling a subbatch to only start after:
• all directly preceding subbatches are scheduled to have been completed,
• all directly preceding subbatches have started too, or
• a moment that allows for the components, the production step corresponding to the subbatch is to operate upon, have been completely processed by the directly preceding steps.

4. The method according to claim 1, 2, or 3, wherein the production steps in the workflow are defined by the individual production devices used to perform the steps.

5. The method according to any of the preceding claims, wherein a subbatch is sent for execution to an image forming device if the subbatch corresponds to a printing production step in the workflow, or to a post-processing device if the subbatch corresponds to a post-processing production step in the workflow.

6. A computer program product embodied on a non-transitory computer readable medium that, if executed on a processor, performs the steps of the method of any of claims 1-5.

7. A printing system comprising at least one image forming device and at least one post-processing device, further comprising a print server configured to run the method according to any of claims 1-5 when in operation.

## Patentansprüche

1. Verfahren zur chargenweisen Fertigung von Druckerzeugnissen, deren Fertigung mehr als einen Fertigungsschritt erfordert, wobei die Druckerzeugnisse eine oder mehrere Komponenten umfassen, wobei das Verfahren die folgenden Schritte umfasst:
- Erstellen einer Charge auf Erzeugnisebene, wobei mehr als ein Erzeugnis angegeben wird, die in der Charge auf Erzeugnisebene gefertigt werden soll;
- Ermitteln eines Arbeitsablaufs, der die Fertigungsschritte zur Fertigung der Erzeugnisse in der Charge auf Erzeugnisebene festlegt;
- Erstellen einer Untercharge für eine Komponente eines zu fertigen Erzeugnis und für einen Fertigungsschritt, der gemäß dem ermittelten Arbeitsablauf auf die Komponente angewendet wird, um den Fertigungsschritt für die Komponente auszuführen, und Zuordnen der Untercharge mit der Charge auf Erzeugnisebene; und
- für im vorherigen Schritt erstellte Unterchargen, Zuordnen einer ersten und einer zweiten Untercharge, wobei die erste Untercharge der zweiten Untercharge im ermittelten Arbeitsablauf unmittelbar vorausgeht, indem das Ergebnis des der ersten Untercharge entsprechenden Produktionsschritts als Speisung für den der zweiten Untercharge entsprechenden Produktionsschritt dient, wie durch den ermittelten Arbeitsablauf festgelegt.

2. Verfahren nach Anspruch 1, weiterhin aufweisend den folgenden Schritt:
- Ordnen der Komponente einer Untercharge, die einem Fertigungsschritt entspricht, basierend auf der Reihenfolge der Komponente einer Untercharge, die einem unmittelbar vorhergehenden oder unmittelbar nachfolgenden Fertigungsschritt entspricht.

3. Verfahren nach Patentansprüche 1 oder 2, weiterhin aufweisend den folgenden Schritt:
- Planen einer Untercharge, die erst gestartet wird, nachdem
• alle unmittelbar vorhergehenden Unterchargen so geplant sind, dass sie abgeschlossen sind,
• alle unmittelbar vorhergehenden Unterchargen ebenfalls angefangen haben, oder
• ein Zeitpunkt erreicht ist, zu dem die Komponenten, die in dem Produktionsschritt, der der Untercharge entspricht, verarbeitet werden sollen, vollständig von den unmittelbar vorhergehenden Schritten verarbeitet worden sind.

4. Verfahren nach Patentansprüche 1, 2 oder 3, wobei die Produktionsschritte im Arbeitsablauf durch die einzelnen Fertigungsvorrichtungen definiert sind, die zur Durchführung der Schritte verwendet werden.

5. Verfahren nach einem der vorstehenden Patentansprüche, wobei eine Untercharge zur Ausführung an eine Bilderzeugungsvorrichtung gesendet wird, wenn die Untercharge einem Druckfertigungsschritt im Arbeitsablauf entspricht, oder an eine Nachbearbeitungsvorrichtung, wenn die Untercharge einem Nachbearbeitungsschritt im Arbeitsablauf entspricht.

6. Computerprogrammprodukt auf einem nichtflüchtigen, computerlesbaren Medium, das, wenn ausgeführt auf einem Prozessor, die Schritte des Verfahrens gemäß einem der Patentansprüche 1 bis 5 ausführt.

7. Drucksystem, das mindestens eine Bilderzeugungsvorrichtung und mindestens eine Nachbearbeitungsvorrichtung umfasst, weiterhin umfassend einen Druckserver, der so konfiguriert ist, dass er das Verfahren gemäß einem der Patentansprüche 1 bis 5 ausführt, wenn er in Betrieb ist.

## Revendications

1. Procédé de production par lots de produits imprimés nécessitant plusieurs étapes de production, les produits imprimés comprenant un ou plusieurs composants, le procédé comprenant les étapes suivantes :
- créer un lot au niveau du produit, en spécifiant plusieurs produits à produire dans le lot au niveau du produit ;
- détermination d'un flux de travail spécifiant les étapes de production pour produire les produits dans le lot au niveau du produit ;
- créer, pour un composant d'un produit à produire et pour une étape de production opérant sur le composant comme spécifié dans le flux de travail déterminé, un sous-lot pour exécuter l'étape de production sur le composant et associer le sous-lot au lot au niveau du produit ; et
- pour les sous-lots créés à l'étape précédente, associer un premier et un deuxième sous-lot dans lesquels le premier sous-lot précède directement le deuxième sous-lot dans le flux de travail déterminé, en ce que la sortie de l'étape de production correspondant au premier sous-lot sert d'entrée à l'étape de production correspondant au deuxième sous-lot, tel que défini par le flux de travail déterminé.

2. Procédé selon la revendication 1, comprenant en outre l'étape consistant à :
- classer le composant d'un sous-lot correspondant à une étape de production en fonction de l'ordre du composant d'un sous-lot correspondant à une étape de production directement précédente ou directement suivante.

3. Procédé selon la revendication 1 ou 2, comprenant en outre l'étape consistant à :
- planifier un sous-lot pour qu'il ne démarre qu'après :
• tous les sous-lots directement précédents aient été programmés pour être terminés,
• tous les sous-lots directement précédents aient également commencé, ou
• un moment permettant aux composants sur lesquels l'étape de production correspondant au sous-lot doit agir, d'avoir été complètement traités par les étapes précédentes.

4. Procédé selon la revendication 1, 2 ou 3, dans lequel les étapes de production dans le flux de travail sont définies par les dispositifs de production individuels utilisés pour exécuter les étapes.

5. Procédé selon l'une quelconque des revendications précédentes, dans lequel un sous-lot est envoyé pour exécution à un dispositif de formation d'images si le sous-lot correspond à une étape de production d'impression dans le flux de travail, ou à un dispositif de post-traitement si le sous-lot correspond à une étape de production de post-traitement dans le flux de travail.

6. Produit logiciel incorporé sur un support lisible par ordinateur non transitoire qui, s'il est exécuté sur un processeur, exécute les étapes du procédé selon l'une quelconque des revendications 1 à 5.

7. Système d'impression comprenant au moins un dispositif de formation d'images et au moins un dispositif de post-traitement, comprenant en outre un serveur d'impression configuré pour exécuter le procédé selon l'une quelconque des revendications 1 à 5 lorsqu'il est en fonctionnement.
